# EUROPÄISCHE PATENTSCHRIFT

(11) **EP 1 016 439 B1**
(45) Veröffentlichungstag und Bekanntmachung des Hinweises auf die Patenterteilung: **17.03.2004**
(21) Anmeldenummer: 99125973.0
(22) Anmeldetag: 28.12.1999
(51) Int. Cl.: B01D 3/00, B01D 3/20, B01J 8/00, B01J 8/20

(54) **Vorrichtung zur Durchführung von Destillationen und heterogen katalysierten Reaktionen**
Device for carrying out distillations and heterogeneous catalytic reactions
Dispositif pour effectuer des distillations et des réactions catalytiques hétérogènes

(30) Priorität: 29.12.1998 DE 19860598
(43) Veröffentlichungstag der Anmeldung: 05.07.2000
(73) Patentinhaber: BASF AKTIENGESELLSCHAFT, 67056 Ludwigshafen (DE)
(72) Erfinder: Adrian, Till, Dr., 67240 Bobenheim-Roxheim (DE); Bessling, Bernd, Dr., 67269 Grünstadt (DE); Hallmann, Heiko, 66497 Contwig (DE); Niekerken, Jörg, 68159 Mannheim (DE); Spindler, Volker, 67317 Altleiningen (DE); Ohligschläger, Andre, 41541 Dormagen (DE); Rimpf, Matthias, 67677 Enkenbach-Alsenborn (DE)
(74) Vertreter: Isenbruck, Günter, Dr.

(56) Entgegenhaltungen:
- EP-A- 0 461 855
- EP-A- 0 571 163
- EP-A- 0 781 829
- WO-A-97/26971
- FR-A- 2 759 302

## Beschreibung

Die Erfindung betrifft eine Vorrichtung zur Durchführung von Destillationen und heterogen katalysierten Reaktionen.

Die Reaktivdestillation ist eine Verfahrensvariante, bei der chemische Reaktion und thermische Stofftrennung simultan in einer Destillationskolonne ablaufen, welche die entstehenden Reaktionsprodukte abtrennt und die nicht umgesetzten Edukte zurück in die Reaktionszone führt. In den vergangenen Jahren sind viele Prozesse zur Herstellung wichtiger Grund- und Zwischenprodukte durch die Anwendung der Reaktivdestillation verbessert worden. Als Beispiel sind hier die Herstellung von Methylacetat sowie die Produktion von Oxygenaten, die als Bleitetraethylersatzstoffe zur Erhöhung der Octanzahl von Kraftstoffen eingesetzt werden, zu nennen.

Häufig handelt es sich bei chemischen Reaktionen um Gleichgewichtsreaktionen, bei denen nur ein begrenzter Umsatz der Edukte erreicht werden kann. Es entsteht daher ein Gemisch aus Produkten und Einsatzstoffen, welches in nachfolgenden Schritten separiert werden muß. In konventionellen Prozessen werden die Einsatzstoffe durch Kreislaufführung in die Reaktionszone zurückgeführt. Bei der Reaktivdestillation geschieht dies ohne externe Kreisläufe direkt in der Reaktivdestillationskolonne. In der industriellen Praxis wird die Reaktivdestillation sowohl heterogen als auch homogen katalysiert angewendet. Die homogene Variante wird in der Regel in Bodenkolonnen durchgeführt, wobei der Katalysator in der flüssigen Phase vorliegt. Bei der heterogenen Variante ist der Katalysator zum Beispiel in Katalysatorpackungen immobilisiert oder liegt in Form bekannter Stoffaustauschelemente vor. Eine weitere Möglichkeit zur Durchführung heterogener Reaktivdestillationen ist die Kombination von Festbettreaktoren und Destillationsböden. Es besteht grundsätzlich die Möglichkeit, die Katalysatorschüttung innerhalb oder außerhalb der Kolonne vorzusehen. Bei den außenliegenden Reaktoren wird die in der Kolonne abfließende Flüssigphase mehrfach seitlich herausgeführt, durch einen außenliegenden Reaktor geleitet und von dort auf den nächst tieferen Boden der Kolonne zurückgegeben. In die außenliegenden Reaktoren kann zusätzlich eine Ausgangsverbindung direkt zugefügt werden. Die Nachteile einer solchen Anordnung liegen in den zusätzlich erforderlichen Geräten und der fehlenden Wärmeintegration der Reaktion in die Destillationskolonne.

Die folgenden Ausführungen beziehen sich auf heterogen katalysierte Reaktionen/Destillationen.

Bei einer Reaktivdestillation können prinzipiell auf dem gleichen Boden Destillation und Reaktion stattfinden. Eine andere Möglichkeit ist, daß für Reaktion und Destillation getrennte Böden eingesetzt werden. Man spricht dann von Reaktionsböden und Destillationsböden.

Heterogener Katalysator kann direkt auf den konventionellen Destillationskolonnenböden angeordnet sein. Sowohl Dampf als auch Flüssigphase strömen dann durch die Katalysatorschüttung. Siebe oder enge Spalten oder ähnliche Vorrichtungen verhindern den Verlust von Katalysatormaterial. Durch den aufsteigenden Dampf werden die Katalysatorpartikel aufgewirbelt. Die Defizite einer solchen Anordnung sind hohe Druckverluste und ständiger Katalysatorverlust durch Abrieb. Zur technischen Realisierung ist es daher notwendig, daß Katalysator entfernt bzw. zugeführt werden kann, um hohe Standzeiten der Anlage aufgrund von Demontage zu verhindern.

Ein häufiger Nachteil vieler Reaktivdestillationen ergibt sich aus der breiten Verweilzeitverteilung. Die Kolonnenböden werden häufig nicht gleichmäßig durchströmt und es treten beispielsweise Beipaßströmungen mit geringen Katalysatorkontaktzeiten auf. Als Folge sind deutliche Umsatzeinbußen zu verzeichnen.

Eine gleichmäßige Durchströmung der Katalysatorschüttung wird durch eine Stromführung erreicht, die in EP-A-0 461 855 vorgeschlagen wird. Das Katalysatorbett ist dabei vollständig geflutet, die Flüssigkeit durchströmt die Schüttung von unten nach oben und läuft über ein Flüssigkeitswehr ab. Die Katalysatorpartikel werden zum Beispiel durch Drahtgewebe am Verlassen des Bodens gehindert. Der Nachteil dieser Vorrichtung ist, daß es nicht möglich ist, den Katalysator aus der Kolonne zu entfernen, ohne den gesamten Apparat zu demontieren.

Das Dokument EP-A-0 571 163 beschreibt eine Vorrichtung mit Destillations - und Reaktionsböden, wobei Füll- und Entleerungseinrichtungen fün den Katalysator vorgesehen sind.

Die Aufgabe der vorliegenden Erfindung besteht darin, eine Vorrichtung zur Durchführung von Destillationen und heterogen katalysierten Reaktionen hervorzubringen, die Reaktions- und Destillationsböden enthält. Dabei soll eine enge Verweilzeitverteilung vorliegen - der heterogene Katalysator soll möglichst gleichmäßig durchströmt werden, ohne daß Todzonen oder Beipaßströmungen auftreten. Außerdem soll der heterogene Katalysator leicht aus der Kolonne entfernbar sein, ohne daß der gesamte Apparat demontiert werden muß. Von besonderer Bedeutung ist außerdem, daß innerhalb der Vorrichtung keine zu hohen Druckverluste auftreten und nur ein geringerer Katalysatorabrieb - zum Beispiel durch Verwirbelung von Partikeln - zu verzeichnen ist. Die Katalysatorschütthöhe soll variabel sein, damit je nach Reaktion entsprechend notwendige Katalysatormengen eingesetzt werden können. Es soll außerdem möglichst vermieden werden, daß in Reaktionsböden ein Überdruck entsteht und infolge dessen ein Rückstau der Flüssigkeit auf den darüberliegenden Destillationsboden auftritt.

Die Lösung dieser Aufgabe ist dann eine Vorrichtung zur Durchführung von Destillationen und heterogen katalysierten Reaktionen enthaltend mindestens ein Segment, das alternierend, übereinander angeordnete Destillations- und Reaktionsböden aufweist, wobei
a) ein oder mehrere Reaktionsböden eine heterogenen Katalysator und Flüssigkeit enthaltende Reaktionszone aufweisen, die so angeordnet ist, daß während der Destillation die Reaktionszone von unten nach oben mit Flüssigkeit durchflossen wird,
b) die in a) genannten Reaktionsböden mit einer Füll- und Entleerungseinrichtung für heterogenen Katalysator sowie mit einer Reinigungseinrichtung, die als Spülapparatur (6, 13) der Reaktionszone ausgebildet ist, ausgestattet sind, der heterogene Katalysator (9) immobilisiert in Packungen oder an Trägem befestigt in der Reaktionszone vorliegt ausgestattet sind, und
c) jeweils mindestens ein Ablauf für Flüssigkeit zwischen den in a) genannten Reaktionsböden und den jeweils nächst tiefer gelegenen Destillationsböden angeordnet ist.

In einer bevorzugten Ausführungsform enthalten die in a) genannten Reaktionsböden einen Gasbeipaß. Dabei wird von unten nach oben strömendes Gas durch die Reaktionsböden geleitet (zum Beispiel in einem Rohr) - das aufsteigende Gas muß also nicht mit dem Katalysator oder der Flüssigkeit in den Reaktionsböden in Kontakt treten. Vorteil ist, daß zum einen keine hohen Druckverluste verursacht werden, und zum anderen der Katalysatorabrieb stark reduziert wird, da die Partikel nicht verwirbelt werden. Das vorstehend als Segment bezeichnete Teil der erfindungsgemäßen Vorrichtung ist in der Regel eine Kolonne oder ein Teil einer Kolonne. Das Segment enthält alternierend, übereinander angeordnete Destillations- und Reaktionsböden - diese sind also wechselweise angeordnet und außerdem übereinander positioniert (übereinander kann auch bedeuten, daß Destillations- und Reaktionsböden schräg übereinander, also nicht unbedingt gerade übereinander angeordnet sind). In einem solchen Segment liegt in der Regel eine nach unten gerichtete Flüssigkeitsströmung und eine nach oben gerichtete Dampfströmung vor.

Die Flüssigkeit verläßt den Destillationsboden über einen Ablaufschacht in die Reaktionszone. Es ist typischerweise jeweils ein Destillationsboden über einen Ablaufschacht mit dem Festbettreaktor (Reaktionszone) verbunden. Der Ablaufschacht leitet somit Flüssigkeit von einem nächst höheren Destillationsboden bevorzugt in den unteren Bereich des nächst tieferen Reaktionsbodens, meist unterhalb der Reaktionszone des Reaktionsbodens. Unterhalb der Reaktionszone sind meist ein oder mehrere Verteilerelemente zur räumlich gleichmäßigen Einleitung der Flüssigkeit in die Reaktionszone angeordnet. Das Verteilerelement kann beispielsweise als Verteilerring ausgebildet sein. Die ablaufende Flüssigkeit muß zwangsläufig die gesamte Reaktionszone, die bevorzugt vollständig mit Flüssigkeit gefüllt ist, durchströmen und verläßt diese über einen Ablauf, der mit dem nächsten Destillationsboden verbunden ist. Es bilden sich somit in der Regel sowohl keine Beipaßströmungen durch die Reaktionszone als auch keine sogenannten Todzonen aus. Die Flüssigkeit durchströmt die Reaktionszone von unten nach oben - das heißt, daß in der Regel eine geradlinige Strömung von unten nach oben vorliegt; jedoch kann die Flüssigkeit auch nicht geradlinig geleitet werden, es muß in diesem Fall allerdings ein resultierender Vektor der Strömungsrichtung nach oben (d.h. entgegen der Schwerkraft) vorliegen.

Der Katalysator liegt immobilisiert in Packungen oder an Trägern befestigt in der Reaktionszone vor. Die Form der Katalysatoren kann prinzipiell verschieden sein. Auch die Art der katalysierten Reaktion kann beliebig variieren. Die erfindungsgemäße Vorrichtung kann insbesondere für Reaktionen, die in der flüssigen Phase stattfinden, zum Beispiel für Veresterungen, Veretherungen, Umesterungen, Alkylierungen usw. eingesetzt werden. Als Katalysator werden zum Beispiel Ionenaustauscher eingesetzt, wobei dann die Partikelgröße bevorzugt im Bereich von 0,3 bis 1,5 mm liegt.

In der Regel ist die Reaktionszone am oberen und unteren Ende mit Flüssigkeits-durchlässigen und Katalysator-undurchlässigen Filterplatten abgegrenzt. Die Filterplatten können dabei beliebige Elemente sein, die eine Filterfunktion wahrnehmen können. Bevorzugt sind dies Drahtgewebe.

In der Regel enthält ein Segment mehrere Reaktionsböden. Im Einzelfall kann aber auch ein Segment nur einen einzigen Reaktionsboden enthalten. Die Reaktionszone (zum Beispiel enthaltend eine Katalysatorschüttung) ist, wie bereits erwähnt, stets geflutet, so daß ausreichend Verweilzeit für die Reaktion zur Verfügung gestellt werden kann. Es werden dazu keine zusätzlichen Geräte benötigt. Durch die Entleerungseinrichtung kann der Katalysator ausgetauscht werden, ohne daß die Apparatur demontiert werden muß. Dies geschieht bevorzugt durch direkte Anschlüsse, durch die der Katalysator in einfacher Weise aus dem Festbettreaktor entfernt werden kann. Damit sind jederzeit ein Austausch. des Katalysators, eine Kapazitätsmessung bei Verdacht auf Desaktivierung und ein vollständiges Entfernen des Katalysators möglich. Die Apparatur ist flexibel, um zum Beispiel verschiedene Katalysatormaterialien in einem speziellen Reaktionssystem hinsichtlich ihrer Selektivität zu testen (Katalysatorscreening). Bei Verwendung einer Katalysatorschüttung ist die Schütthöhe variabel. Da die Schütthöhe in der Katalysatorschüttung von außen vorgebbar ist, können je nach Reaktion entsprechende Katalysatormengen eingesetzt werden. So ist es auch möglich, ohne Umbau die Katalysatormenge der Reaktion bzw. den Komponentenprofilen anzupassen. Es ist dabei sinnvoll, die Reaktionszone einer Reaktionskolonne in drei Bereiche einzuteilen: In negative, neutrale und positive Zonen. In bestimmten Kolonnenabschnitten werden durch den Katalysator verstärkt Nebenreaktionen oder Rückreaktionen katalysiert, so daß die Ausbeute und die Produktreinheit gemindert werden. Diese Abschnitte werden als negative Zonen bezeichnet. Es ist sinnvoll, den Katalysator aus negativen Zonen der Kolonne zu entfernen und dort nur Destillation vorzusehen. Ist die Zusammensetzung des Reaktionsgemisches nahe der Gleichgewichtszusammensetzung, dann ist es nicht erforderlich; an dieser Stelle Katalysator anzuordnen, da keine Reaktion abläuft (die Produktkonzentration ändert sich nicht). Es ist jedoch unproblematisch, wenn in solchen Abschnitten Katalysator angeordnet ist. Diese Kolonnenabschnitte werden neutrale Abschnitte genannt. Positive Abschnitte sind solche, in denen die gewünschte Reaktion abläuft. Mit der vorliegenden Apparatur kann auf diese verschiedenen Zonen reagiert werden, ohne die Apparatur zu demontieren - entsprechend den verschiedenen Zonen kann die Kolonne mit Destillationsböden (Destillationsfüllkörpern) oder Reaktionsböden (heterogener Katalysator) ausgestattet werden.

In der Regel ist als Verbindung zwischen den Reaktionsböden und den jeweils nächst höher gelegenen Destillationsböden mindestens ein Gasabzug angeordnet. Solche Gasabzüge bestehen meist aus einem unteren Bereich, der häufig als Gasraum ausgestaltet ist und einem oberen Bereich, wobei der untere Bereich sich in der Regel innerhalb eines Reaktionsbodens und der obere Bereich sich meist innerhalb eines Destillationsbodens befindet. Durch den Gasabzug können bei der heterogen katalysierten Reaktion erzeugte gasförmige Produkte oder durch Verdampfung entstandene Gase (meist in der Reaktionszone entstandene Gase) nach oben entweichen. Damit wird vermieden, daß im Reaktionsboden Überdruck entsteht und infolge dessen ein Rückstau der Flüssigkeit auf den darüberliegenden Destillationsboden auftritt. Werden in der Reaktionszone Gase gebildet, so strömen Gas und Flüssigkeit typischerweise innerhalb des Reaktionsbodens im Gleichstrom von unten nach oben.

Die erfindungsgemäße Vorrichtung enthält Reaktionsböden, die jeweils mit einer Reinigungseinrichtung ausgestattet sind. Diese ist bevorzugt als Spülapparatur der Reaktionszone ausgebildet und enthält in der Regel eine ersten, im oberen Bereich des Reaktionsbodens angeordneten Spülanschluß und einen zweiten, im unteren Bereich des Reaktionsbodens angeordneten Spülanschluß. Der Katalysator kann somit durch Spülen gereinigt werden. Es gelingen das Einund Ausspülen des Katalysators, sowie die Reinigung der Filterelemente.

In einer weiteren bevorzugten Ausführungsform der Erfindung können in der Reaktionszone Kühl- und Heizelemente (zum Beispiel Kühl- und Heizschlangen) angeordnet sein. Dies ist insbesondere dann wichtig, wenn stark exotherme Reaktionen vorliegen (Kühlung ist notwendig) oder wenn schwach wärmetönende oder endotherme Reaktionen ablaufen (Erwärmung kann in einem solchen Fall von Vorteil sein).

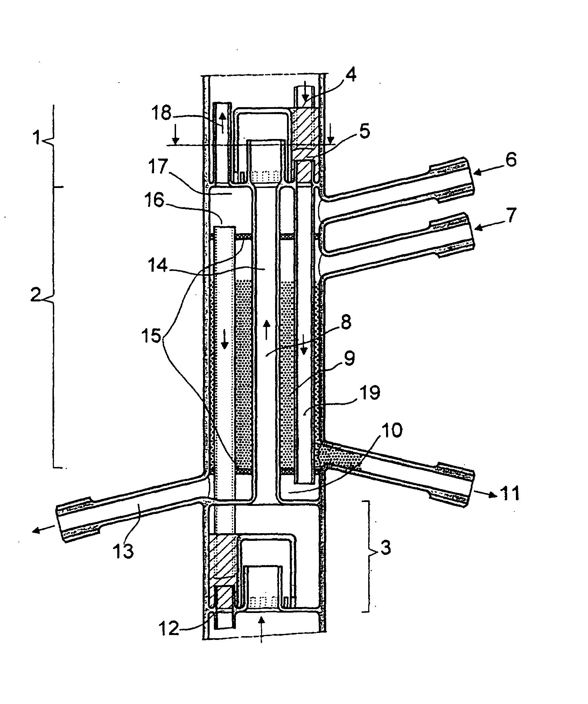

Im folgenden soll die Erfindung anhand eines bevorzugten Ausführungsbeispiels zusätzlich beschrieben werden.
Eine entsprechende Skizze ist in Fig. 1 der anliegenden Zeichnung dargestellt. Diese zeigt ein Segment aus zwei Destillationsböden, die als Glockenböden ausgebildet sind und einem Reaktionsboden.

In dem Segement, bestehend aus einem Kolonnenschuß, ist zwischen zwei Glockenböden (unterer Glockenboden 3 und oberer 1) ein Reaktionsboden 2 zum Einbringen des heterogenen Katalysators 9, der in Form einer Feststoffpartikelschüttung vorliegt, angeordnet. Die gesamte Flüssigkeit strömt von oben durch das Fallrohr 4 auf den Glockenboden 1 und verläßt diesen über ein Ablaufwehr 5. Der Ablauf ist bis in den Verteilerring 10 unterhalb des Katalysatorbettes abgetaucht, der mit einem Spülanschluß 13 zum Reinigen der Filterplatte (Drahtgewebe 15) versehen ist. Auch eine Probenentnahme kann hier erfolgen. Die Kammer ermöglicht die gleichmäßige Verteilung der Flüssigkeit, so daß das Katalysatorbett gleichmäßig von unten nach oben durchströmt wird (es liegen weder Totzonen noch Abfluß durch Kurzschlüsse wie Beipaßströmungen vor). Die gesamte Flüssigkeit steigt nun auf das auf der Filterplatte 15 ruhende Katalysatorbett nach oben. Dabei läuft die Reaktion ab. Gasförmige Produkte oder Gase, die durch Verdampfung bei exothermen Reaktionen entstehen, strömen im Reaktionsboden mit der Flüssigkeit im Gleichstrom von unten nach oben. Die Katalysatorkammer verfügt über einen Gasabzug (unterer Bereich 17; oberer Bereich 18), durch den das Gas in den oberen Glockenboden 1 geführt wird ohne daß im als Gasraum ausgebildeten unteren Bereich des Gasabzugs 17 ein Überdruck entsteht und ein Stauen von Flüssigkeit im Fallrohr 19 verursacht wird. Der Reaktionsboden 2 ist unabhängig von der Schüttungshöhe bis zum Ablaufwehr 16 geflutet ("dieses läuft ständig über") - über das die Flüssigkeit den Reaktionsboden wieder verläßt. Eine weitere Filterplatte 15 verhindert ein Mitreißen von Katalysatorpartikeln. Das Fallrohr 14 führt die Flüssigkeit auf den nachfolgenden Glockenboden 3. Anschließend verläßt die Flüssigkeit das Segment durch den Ablauf 12. Die Schütthöhe des Katalysators kann durch zwei Anschlüsse 7; 11 beliebig variiert werden. Durch diese Anschlüsse ist eine flexible Anpassung des Katalysators in Art und Menge (Schütthöhe) möglich, ohne die Apparatur zu demontieren. Die Reinigung der Filterplatten ist durch zwei zusätzliche Spülanschlüsse 6; 13 möglich. Das aufsteigende Gas wird im Gasbeipaß 8 (als zentral angeordnetes Steigrohr ausgebildet) direkt von einem Glockenboden 3 zum nächsten 1 geführt.

## Patentansprüche

1. Vorrichtung zur Durchführung von Destillationen und heterogen katalysierten Reaktionen enthaltend mindestens ein Segment, das alternierend, übereinander angeordnete Destillations- und Reaktionsböden (2) aufweist, wobei
a) ein oder mehrere der Reaktionsböden (2) einen heterogenen Katalysator (9) und Flüssigkeit enthaltende Reaktionszone aufweisen, die so angeordnet ist, daß während der Destillation die Reaktionszone von unten nach oben mit Flüssigkeit durchflossen wird,
b) die in a) genannten Reaktionsböden (2) mit einer Füll- und Entleerungseinrichtung (7, 11) für heterogenen Katalysator (9) sowie mit einer Reinigungseinrichtung, die als Spülapparatur (6, 13) der Reaktionszone ausgebildet ist, ausgestattet sind, der heterogene Katalysator (9) immobilisiert in Packungen oder an Trägern befestigt in der Reaktionszone vorliegt und
c) jeweils mindestens ein Ablauf für Flüssigkeit zwischen den in a) genannten Reaktionsböden und den jeweils nächst tiefer gelegenen Destillationsböden angebracht sind.

2. Vorrichtung nach Anspruch 1, **dadurch gekennzeichnet, daß** die in a) genannten Reaktionsböden einen Gasbypass (8) enthalten.

3. Vorrichtung nach Anspruch 1 oder 2, **dadurch gekennzeichnet, daß** als Verbindung zwischen den in a) genannten Reaktionsböden (2) und den jeweils nächst höher gelegenen Destillationsböden, jeweils mindestens ein Gasabzug (17, 18) angeordnet ist.

4. Vorrichtung nach einem der Ansprüche 1 bis 3, **dadurch gekennzeichnet, daß** die Reaktionszone am oberen und unteren Ende mit Flüssigkeits-durchlässigen und Katalysator-undurchlässigen Filterplatten (15) abgegrenzt ist.

5. Vorrichtung nach einem der Ansprüche 1 bis 4, **dadurch gekennzeichnet, daß** unterhalb der Reaktionszone ein oder mehrere Verteilerelemente zur räumlich gleichmäßigen Einleitung der Flüssigkeit in die Reaktionszone, angeordnet sind.

6. Vorrichtung nach einem der Ansprüche 1 bis 5, **dadurch gekennzeichnet, daß** ein oder mehrere Segmente nur einen Reaktionsboden (2) enthalten.

## Claims

1. An apparatus for carrying out distillations and heterogeneously catalyzed reactions, containing at least one segment which has alternating distillation trays and reaction trays (2) arranged one above the other,
a) one or more reaction trays (2) having a reaction zone which contains heterogeneous catalyst (9) and liquid and is arranged so that liquid flows through the reaction zone from bottom to top during the distillation,
b) the reaction trays (2) stated in a) being equipped with a filling and emptying means (7,11) for heterogeneous catalyst (9) and with a purification means which is in the form of a flushing apparatus (6,13) of the reaction zone, the heterogeneous catalyst (9) being present in immobilized form in packings or on supports fastened in the reaction zone and
c) in each case at least one outflow for liquid being mounted between the reaction trays stated in a) and the respective next lower distillation trays.

2. An apparatus as claimed in claim 1, wherein the reaction trays stated in a) contain a gas bypass (8).

3. An apparatus as claimed in claim 1 or 2, wherein in each case at least one gas take-off (17; 18) is arranged as a connection between the reaction trays (2) stated in a) and the respective next higher distillation trays.

4. An apparatus as claimed in any of claims 1 to 3, wherein the reaction zone is bounded at the upper and lower end by liquid-permeable and catalyst-impermeable filter sheets (15).

5. An apparatus as claimed in any of claims 1 to 4, wherein one or more distributor elements for introducing liquid into the reaction zone in a spatially uniform manner are arranged below the reaction zone.

6. An apparatus as claimed in any of claims 1 to 5, wherein one or more segments contain only one reaction tray (2).

## Revendications

1. Dispositif pour effectuer des distillations et des réactions sous catalyse hétérogène, contenant au moins un segment qui présente des étages de distillation et de réaction (2) superposés de manière alternée, tandis que
(a) un ou plusieurs des étages de réaction (2) présentent une zone de réaction contenant un catalyseur hétérogène (9) et un fluide, qui est agencée de telle manière que pendant la distillation la zone de réaction est traversée de bas en haut par du fluide,
b) l'étage de réaction (2) indiqué sous a) est équipé d'un dispositif de remplissage et de vidange (7, 11) pour le catalyseur hétérogène (9), ainsi que d'un dispositif de nettoyage , qui est formé d'un appareil de rinçage (6, 13) de la zone de réaction, le catalyseur hétérogène (9) est immobilisé dans des garnissages ou est fixé sur des supports dans la zone de réaction, et
c) à chaque fois sont ménagées au moins une sortie pour le fluide entre les étages de réaction indiqués sous a) et l'étage de distillation situé à chaque fois immédiatement en dessous.

2. Dispositif selon la revendication 1, **caractérisé par le fait que** les étages de réaction indiqués sous a) contiennent une dérivation de gaz (8).

3. Dispositif selon la revendication 1 ou 2, **caractérisé par le fait qu'**est placée en tant que jonction entre les étages de réaction (2) indiqués sous a) et les étages de distillation situés à chaque fois immédiatement au-dessus, à chaque fois au moins une sortie de gaz (17,18).

4. Dispositif selon l'une des revendications 1 à 3, **caractérisé par le fait que** la zone de réaction est délimitée à l'extrémité supérieure et inférieure avec des plaques filtrantes (15) laissant passer les fluides et ne laissant pas passer le catalyseur.

5. Dispositif selon l'une des revendications 1 à 4, **caractérisé par le fait que** sont disposés sous la zone de réaction un ou plusieurs éléments de réparition pour l'introduction du fluide dans la zone de réaction de manière homogène dans l'espace.

6. Dispositif selon l'une des revendications 1 à 5, **caractérisé par le fait qu'**un ou plusieurs segments contiennent seulement un étage de réaction (2).
